# FASCICULE DE BREVET EUROPEEN

(11) **EP 2 542 395 B1**
(45) Date de publication et mention de la délivrance du brevet: **04.06.2014**
(21) Numéro de dépôt: 11704658.1
(22) Date de dépôt: 20.01.2011
(51) Int. Cl.: B29B 9/06, B29B 9/12, C08F 255/02, C08J 3/12, C08L 51/06

(54) **PROCEDE DE FABRICATION DE GRANULES DE POLYPROPYLENE POST RETICULABLE APRES TRANSFORMATION; GRANULES OBTENUS ET ARTICLES MOULES FABRIQUES A PARTIR DES GRANULES**
VERFAHREN ZUR HERSTELLUNG VON NACH DER VERARBEITUNG VERNETZUNGSFÄHIGEM POLYPROPYLENGRANULAT, AUF DIESE WEISE GEWONNENES GRANULAT UND AUS DEM GRANULAT HERGESTELLTE FORMTEILE
METHOD FOR MANUFACTURING POLYPROPYLENE GRANULES WHICH CAN BE SECONDARILY CROSS-LINKED AFTER PROCESSING; GRANULES OBTAINED, AND MOLDED ARTICLES MANUFACTURED FROM THE GRANULES

(30) Priorité: 03.03.2010 FR 1051527
(43) Date de publication de la demande: 09.01.2013
(73) Titulaire: Setup Performance, 38290 Frontonas (FR)
(72) Inventeur: GIMENEZ, Jérôme, F-69100 Villeurbanne (FR); LAGNEAUX, Didier, F-74290 Bluffy (FR)
(74) Mandataire: Denjean, Eric
(86) Numéro de dépôt international: PCT/FR2011/050100
(87) Numéro de publication internationale: WO 2011/107680

(56) Documents cités:
- EP-A2- 0 659 784
- WO-A1-2010/000478
- US-A1- 2003 130 420

## Description

### DOMAINE DE L'INVENTION

L'invention concerne un procédé de fabrication de polypropylène post réticulable après transformation. Elle a également pour objet des granulés susceptibles d'être obtenus par le procédé et le moulage d'objets à partir de ces granulés.

Dans la suite de la description, on entend par polypropylène les polypropylènes homopolymères et les copolymères statistiques de polypropylène et d'éthylène contenant 1.5 à 7 % en masse de motif éthylénique, seuls ou en mélange.

### ETAT ANTERIEUR DE LA TECHNIQUE

La réticulation de polymères permet de changer leur structure en créant des liaisons covalentes entre les macromolécules constituant lesdits polymères notamment par l'intermédiaire d'un monomère réticulant. Cette méthode permet de modifier les propriétés desdits polymères, et peut en outre contribuer à l'amélioration de leur résistance thermomécanique. Elle est généralement effectuée par voie thermique ou par voie humide.

La réticulation des polyoléfines peut être réalisée par incorporation, suivie du greffage d'un monomère réticulant sur le polymère. Il s'agit de réticulation silane lorsque le monomère réticulant est un vinylsilane. La réticulation est précédée de deux étapes qui sont l'incorporation du silane et son greffage. L'incorporation du monomère réticulant et de l'amorceur peut être réalisée en phase solide ou fondue selon les polyoléfines. Le greffage du vinylsilane sur la polyoléfine s'effectue par réaction radicalaire et nécessite donc la présence d'un amorceur, choisi en général parmi les peroxydes organiques.

Par exemple, le document EP 0659784A2 décrit un procédé continu de greffage d'une polyoléfine dans une extrudeuse, et dans lequel la réaction de greffage a lieu essentiellement en phase fondue.

Après greffage, la polyoléfine greffée silane est réticulée par hydrolyse condensation des fonctions silane. Bien que cette technique de réticulation par voie silane soit très efficace en ce qui concerne les polyéthylènes, elle montre ses limites dans le cas des polypropylènes homopolymères ou des copolymères statistiques de polypropylène et d'éthylène. En effet, lors de l'imprégnation et du greffage du polypropylène, le peroxyde se décompose et forme des radicaux. Ces radicaux attaquent préférentiellement la chaîne carbonée du polypropylène au niveau des carbones tertiaires. Les radicaux tertiaires ainsi formés sont très instables et conduisent à des réactions de coupures de chaînes et donc à une dégradation des masses molaires. Ces réactions de coupures de chaînes sont appelées Beta-scission.

Ce phénomène n'intervient pas dans la réticulation silane du polyéthylène car ce dernier ne contient pas ou très peu de carbone tertiaire.

Le principal problème de l'association du polypropylène et des peroxydes à haute température est donc la dépolymérisation du polypropylène quand ce dernier est exposé à un radical.

L'efficacité de cette technique a cependant été démontrée pour les copolymères à blocs poly(éthylène co propylène) contenant 10 à 35% en masse de motifs éthylène, les mélanges polypropylène/polyéthylène ou polypropylène / élastomère type EPDM. Les taux gels obtenus après réticulation silane pour de telles compositions et pour le polyéthylène sont de l'ordre de 80 % alors que sans ajout de polyéthylène ou d'EPDM des taux compris entre 30 et 50 % sont obtenus pour le polypropylène homopolymère ou pour le copolymère statistique de polypropylène et d'éthylène seul.

Ces résultats démontrent que cette méthode demeure inadéquate pour le polypropylène homopolymère ou pour le copolymère statistique de polypropylène et d'éthylène seul.

Pour contourner le phénomène de Beta-scission, le document US 2003/0050401 décrit des produits préparés à partir de mélanges comprenant du polyéthylène greffé silane et au moins 50 % de polypropylène non greffé.

Un procédé de modification chimique a aussi été proposé par Rätzsch et al. (Prog. Polym. Sci. 27 (2002) 1195-1282) et par Borsig et al. (Macromol. Symp. 176, 289-298 (2001)) dans lequel la mise en oeuvre implique la transformation des granulés de polypropylène sous la forme de poudre. L'imprégnation est effectuée en phase solide, à une température inférieure à 80 °C pour éviter les réactions de Beta-scission suite à la décomposition du peroxyde. Le greffage est effectué par post cuisson à l'état solide à 130 °C, température à laquelle les radicaux tertiaires formés se recombinent sans coupure de chaîne, limitant ainsi la dégradation des masses molaires du polypropylène. Le polypropylène homopolymère greffé silane ainsi obtenu est thermoplastique et réticulable par hydrolyse condensation des fonctions silane. Cependant, ce procédé ne peut pas être mis en oeuvre pour des granulés de polypropylène homopolymère. En outre, il implique une étape de transformation des granulés en poudre avant de procéder à l'imprégnation du polypropylène homopolymère.

Il est établi dans l'art antérieur que l'imprégnation du polypropylène par des vinylsilanes et des peroxydes en phase fondue ne conduit pas à une réticulation satisfaisante, la dégradation des peroxydes entrainant des réactions de Beta-scission et donc une baisse de masse molaire. En outre, les techniques développées pour assurer l'imprégnation en phase solide restent contraignantes quant à leur mise en oeuvre.

Le demandeur a mis au point un procédé permettant d'obtenir des granulés de polypropylène au sens de l'invention réticulable après transformation. L'imprégnation du polypropylène est effectuée en phase fondue dans une extrudeuse monovis ou bi-vis.

Alors que l'art antérieur pertinent implique la transformation en poudre des granulés de polypropylène avant imprégnation et greffage, le procédé selon l'invention permet d'utiliser des granulés de polypropylène sans étape préalable de transformation, pour fabriquer des granulés de polypropylène post réticulable.

### EXPOSE DE L'INVENTION

Comme déjà mentionné, dans le cadre de l'invention, on entend par polypropylène les polypropylènes homopolymères et les copolymères statistiques de polypropylène et d'éthylène contenant 1.5 à 7 % en masse de motif éthylénique, seuls ou en mélange.

Ainsi, la présente invention offre une nouvelle approche mettant en oeuvre un procédé de fabrication de granulés de polypropylène, ledit polypropylène étant du polypropylène homopolymère et/ou du copolymère statistique de polypropylène et d'éthylène contenant en pratique, de 1.5 à 7 % en masse de motif éthylénique, post réticulable selon les étapes suivantes :
- dans une extrudeuse, on imprègne le polypropylène avec au moins un monomère réticulable et au moins un amorceur ;
- en sortie d'extrudeuse, on refroidit les joncs obtenus ;
- on granule le polypropylène imprégné ;
- on greffe au moins un monomère réticulable par post cuisson.

L'invention se caractérise en ce que, dans l'extrudeuse :
- on introduit le polypropylène sous forme de granulés dans une première zone (1) de l'extrudeuse à une température supérieure à 165 °C, éventuellement en présence d'au moins un monomère réticulable et/ou d'au moins un amorceur ;
- lorsque au moins un amorceur n'est pas introduit dans la première zone (1) de l'extrudeuse, il est introduit dans une deuxième zone (2) de l'extrudeuse, éventuellement en présence d'au moins un monomère si celui-ci n'a pas été introduit préalablement dans la première zone (1) de l'extrudeuse ;
- la température de la deuxième zone (2) de l'extrudeuse est comprise entre 130 et 165 °C et préférentiellement entre 135 et 150°C ;
- le temps de présence de l'amorceur dans chaque zone de l'extrudeuse est inférieur au cinquième de son temps de demi-vie de décomposition à la température de ladite zone (t1/2 (T)>5x temps de présence), éventuellement inférieur à un dixième de son temps de demi-vie de décomposition à la température de ladite zone (t1/2 (T)>10x temps de présence).

Lorsque plusieurs amorceurs sont introduits, au moins un amorceur peut être introduit dans la première zone (1) de l'extrudeuse alors que le ou les autres amorceurs sont introduits dans la deuxième zone (2) de l'extrudeuse. Il en va de même dans le cas où plusieurs monomères sont introduits.

L'amorceur permet d'initier la réaction radicalaire de greffage du monomère réticulant sur le polypropylène. Comme son nom l'indique, le monomère réticulant permet la réticulation du polypropylène.

Le terme « joncs » désigne les profilés de toute forme mais généralement cylindriques de polypropylène fondu imprégné du monomère réticulant et de l'amorceur obtenus à la sortie de l'extrudeuse.

Plus précisément, le procédé de fabrication de granulés de polypropylène post réticulable selon l'invention consiste tout d'abord, à mélanger dans une extrudeuse au moins du polypropylène, au moins un monomère réticulable et au moins un amorceur. L'extrudeuse monovis ou bi-vis comporte deux zones bien distinctes. Le polypropylène est introduit sous forme de granulés dans la première zone (1) de l'extrudeuse où la température est supérieure à 165 °C, éventuellement en présence de monomère réticulable et de l'amorceur. Le polypropylène est cisaillé et fondu dans cette première zone de l'extrudeuse.

Le monomère réticulant et l'amorceur peuvent être incorporés au polypropylène en phase fondue dans la première zone (1) de l'extrudeuse ou dans une deuxième zone (2).

Lorsque l'amorceur n'est pas introduit dans la première zone (1) de l'extrudeuse, il est introduit dans une deuxième zone (2) de l'extrudeuse, éventuellement en présence du monomère si celui-ci n'a pas été introduit préalablement dans la première zone (1). La température de la deuxième zone (2) de l'extrudeuse est comprise entre 130 et 165 °C et préférentiellement entre 135 et 150°C.

De façon préférentielle, l'amorceur au moins est introduit dans une deuxième zone (2) de l'extrudeuse, à une température comprise entre 130 et 165 °C.

Avantageusement, le temps de présence de l'amorceur dans chaque zone est inférieur au cinquième de son temps de demi-vie de décomposition à la température de la dite zone, et éventuellement inférieur à un dixième dudit temps de demi-vie. Typiquement dans le cas où le peroxyde est le tert butyl perbenzoate, si l'amorceur est introduit dans la zone 2, le temps de présence n'excèdera pas 7 minutes à 130°C et 1 minute à 150°C.

Si l'amorceur est introduit dans la zone 1, notamment dans le cas où le peroxyde est le tert butyl perbenzoate, le temps de présence dans la zone 1 n'excèdera pas 30 secondes à 165°C et 6 secondes à 180°C. Ensuite, le temps de présence dans la zone 2 n'excèdera pas 7 minutes à 130°C et 1 minute à 150°C.

Le temps de demi-vie de dégradation correspond au temps nécessaire pour que la moitié de la quantité d'amorceur se décompose à la température considérée.

Le passage du polypropylène de la première (1) à la deuxième (2) zone de l'extrudeuse se traduit par une augmentation de la viscosité du polymère, la température de la deuxième zone (2) de l'extrudeuse étant inférieure à celle de la première zone (1). Néanmoins, il est important de noter que le polypropylène est maintenu en phase fondue dans l'extrudeuse.

Selon le mode de réalisation choisi, trois types d'incorporation des matériaux peuvent être envisagés, à savoir, a) l'introduction du polypropylène, du monomère réticulable et de l'amorceur dans la première zone (1) de l'extrudeuse ; ou b) l'introduction du polypropylène et du monomère réticulable dans la première zone (1) de l'extrudeuse, l'amorceur étant introduit dans la deuxième zone (2) de l'extrudeuse ; ou c) l'introduction du polypropylène dans la première zone (1) de l'extrudeuse, le monomère réticulable et l'amorceur étant introduit dans la deuxième zone (2) de l'extrudeuse.

L'extrudeuse permet donc d'imprégner le polypropylène d'un monomère pouvant être réticulé ultérieurement et d'un amorceur qui entraine le début de la réaction de greffage mais qui est majoritairement préservé pour la réaction de greffage lors de la post cuisson à l'état solide.

Les joncs obtenus en sortie de filière sont refroidis, préférentiellement par trempage dans l'eau. Ils sont ensuite granulés c'est-à-dire coupés sous la forme de granulés, puis séchés en séchoir ou sous vide. Il est important de noter que lors du trempage la surface du jonc est en contact avec l'eau, cependant la cristallisation rapide de la surface et la faible durée de trempage ne permettent pas d'accomplir la réticulation du monomère réticulable dans cette étape de trempage. Le polypropylène imprégné est donc transformé sous forme de granulés thermoplastiques et injectables à la sortie de l'extrudeuse.

De manière avantageuse, le monomère réticulable est un vinyltrialcoxy silane de formule CH₂=CH-Si(OR)₃. Le groupement R représente un alkyle linéaire, ramifié et/ou cyclique comportant de 1 à 20 atomes de carbones, plus avantageusement R = CH₃.

Selon le mode opératoire choisi, le pourcentage en masse du monomère réticulable est compris entre 1 et 10 % par rapport au polypropylène, plus avantageusement entre 2 et 4%.

L'amorceur est un peroxyde organique, plus avantageusement le *tert*-butyl-perbenzoate comme indiqué précédemment. Son pourcentage en masse est compris entre 0.1 et 4 % par rapport au polypropylène, plus avantageusement entre 0.5 et 2 %. Il est à noter que l'on peut diminuer la quantité d'amorceur et de monomère réticulant nécessaires à la réalisation de l'invention en imprégnant le polypropylène, en outre, de monomère polyvinylique ou polyacrylate et plus avantageusement de pentaerythritol tetra acrylate. L'imprégnation de ce monomère polyfonctionnel peut permettre d'augmenter la densité de réticulation après hydrolyse.

Le greffage du monomère réticulable est effectué par post cuisson. Deux modes opératoires se distinguent *i.e.* la cuisson sous pression atmosphérique en milieu confiné et la cuisson sous vide. Comme indiqué précédemment, la post cuisson assure la formation de liaisons covalentes entre les macromolécules du polypropylène et le monomère réticulable.

De manière préférentielle, le greffage du monomère réticulable sur le polypropylène est réalisé par post cuisson sous pression atmosphérique ou sous vide, respectivement à une température comprise entre 120 et 150 °C pendant 1 à 6 heures et entre 20°C et 110 °C pendant 6 à 24 heures.

Après cette étape de post cuisson à l'état solide, le polypropylène greffé par le monomère réticulable est thermoplastique et extrudable et/ou injectable. Lors de la mise en forme, l'ajout d'additifs tels que, avantageusement, un catalyseur d'hydrolyse des silanes greffés, un renfort choc, une charge minérale ou organique, est possible.

La présente invention concerne aussi des granulés de polypropylène réticulable susceptibles d'être obtenus par le procédé décrit ci-dessus. Elle concerne également les articles moulés susceptibles d'être obtenus à partir desdits granulés après injection desdits granulés et réticulation en atmosphère humide du polypropylène imprégné et post-cuit.

Le moulage par injection des granulés est réalisé selon les techniques connues par l'homme du métier. Le polypropylène greffé par ce procédé d'imprégnation suivi d'une post cuisson est réticulé en milieu humide, avantageusement par trempage dudit article moulé ou par simple action de l'humidité de l'air ambiant.

La présente invention permet de transformer des granulés de polypropylène en granulés réticulables après transformation par une mise en oeuvre rapide et sans dégradation dramatique des masses molaires du polypropylène. Elle permet aussi de confectionner des articles moulés à partir de ces granulés de polypropylène post réticulable.

### EXEMPLES DE REALISATION ET DESCRIPTION DETAILLEE DE L'INVENTION

L'invention et les avantages qui en découlent ressortiront mieux des figures et exemples suivants.

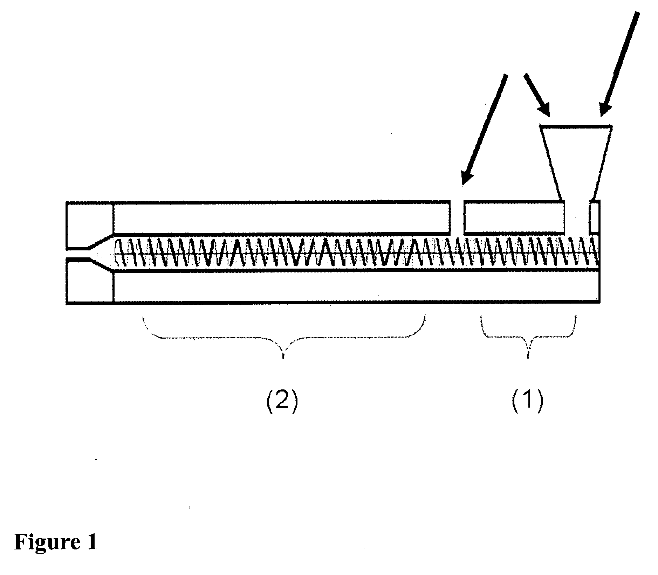

La figure 1 représente une extrudeuse en coupe et schématise le procédé d'imprégnation en indiquant le type de profil de vis utilisé, le profil de température et les lieux d'incorporation des constituants. Le cisaillement et la fusion du polypropylène ont lieu dans la première zone (1) de l'extrudeuse. La deuxième zone (2) de l'extrudeuse délimite la zone de malaxage entre la première zone (1) et la sortie de filière. Les lieux d'incorporation des constituants sont, de manière non limitative, indiqués par des flèches.

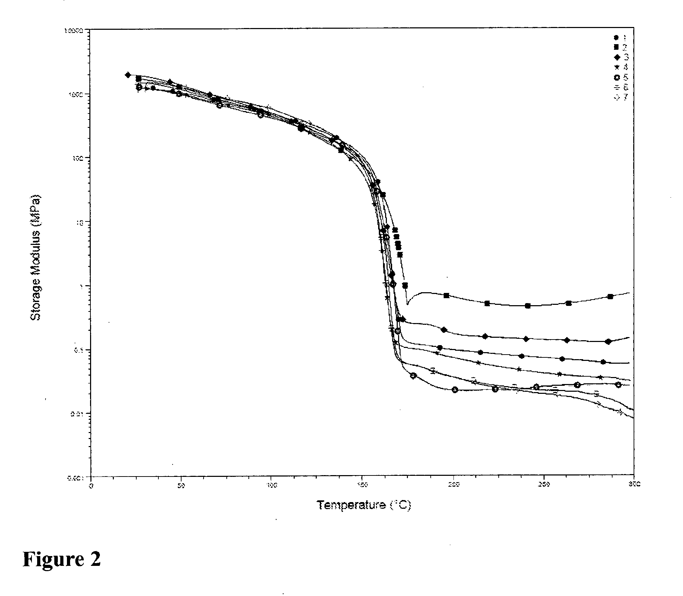

La figure 2 correspond aux courbes DMTA (Dynamic Mechanical Thermal Analysis) obtenues en traction à une fréquence de 1 Hz pour un gradient de température de 3 °C/min à partir de polypropylènes réticulés. Ces courbes permettent de comparer les performances une fois réticulés des polypropylènes greffés par imprégnation et post cuisson suivant le procédé.

Tous les essais ont été réalisés en utilisant le polypropylène homopolymère Adstif HA840K et une extrudeuse bi-vis corotative de marque TSA ayant un diamètre (D) de 21 et de rapport L/D égal à 50.

Dans ces exemples de réalisation, on distingue parmi les composés incorporés au polypropylène :
- les peroxydes organiques choisis parmi le Luperox^{®} P, Luperox^{®} DCP, Luperox^{®} 101 et Luperox^{®} TBICM75 ;
- le vinyltrimethoxy silane, VTMO ; et
- le pentaerythritol tetra acrylate, SR295.

Sept échantillons de polypropylène dont la composition est résumée dans le tableau 1 ci-dessous ont été préparés.

**Tableau 1 : Compositions des échantillons 1 à 7 (PP = polypropylène homopolymère).**

| Exemple | Peroxyde | Mol de peroxyde par kg de PP | Rapport molaire VTMO/peroxyde | Mol de SR295 par kg de PP | Zone d'incorporation du peroxyde et du VTMO |
|---|---|---|---|---|---|
| 1 | Luperox P | 0.1 | 2.7 | 0 | 1 |
| 2 | | 0.1 | 2.7 | 0 | 1 |
| 3 | | 0.1 | 2.7 | 0 | 2 |
| 4 | | 0.05 | 2.7 | 0.1 | 1 |
| 5 | Luperox DCP | 0.1 | 2.7 | 0 | 1 |
| 6 | Luperox 101 | 0.05 | 2.7 | 0 | 1 |
| 7 | Luperox TBICM75 | 0.1 | 2.7 | 0 | 1 |

### Mode opératoire général de préparation des échantillons :

Le polypropylène homopolymère Adstif HA840K est introduit sous la forme de granulés dans la première zone (1) de l'extrudeuse bi-vis où il est cisaillé et fondu à une température de 165 °C. L'incorporation des quantités adéquates d'amorceur et de monomère réticulable a lieu en phase fondue dans la première zone (1) ou dans la deuxième zone (2) (exemple 3) de l'extrudeuse. La température dans la deuxième zone (2) de l'extrudeuse est comprise entre 130 et 165 °C.

L'incorporation de polyacrylate (exemple 4) est effectuée dans la première zone de l'extrudeuse.

L'imprégnation du polypropylène est réalisée par malaxage dans la deuxième zone (2) de l'extrudeuse pendant une période inférieure à cinq minutes. A sa sortie de l'extrudeuse, le polypropylène imprégné est refroidi puis granulé. Après séchage, les granulés de polypropylène imprégné subissent une étape de post cuisson (greffage) à l'état solide selon les conditions récapitulées dans le tableau 2.

Les granulés sont ensuite mis en forme par moulage par injection selon les techniques connues de l'homme du métier.

La réticulation du polypropylène imprégné est assurée par trempage des pièces moulées dans l'eau à 80 °C pendant 12 heures.

**Tableau 2 : Conditions de post cuisson des échantillons 1 à 7.**

| Exemple | Température de post cuisson (°C) | Temps de post cuisson (heure) | Ambiance |
|---|---|---|---|
| 1 | 130 | 3 | Sous air en milieu confiné |
| 2 | 70 | 12 | Sous Vide |
| 3 | 130 | 3 | Sous air en milieu confiné |
| 4 | 130 | 3 | Sous air en milieu confiné |
| 5 | 140 | 3 | Sous air en milieu confiné |
| 6 | 145 | 3 | Sous air en milieu confiné |
| 7 | 122 | 3 | Sous air en milieu confiné |

### EXEMPLES 1 A 7 :

Comme indiqué ci-dessus, sept échantillons distincts de polypropylène imprégné ont été préparés en modifiant soit les conditions de post cuisson, soit la zone d'introduction de l'amorceur et du monomère réticulant, soit la nature du peroxyde ou sa concentration. Un échantillon (exemple 4) contenant un polyacrylate a aussi été préparé.

Les échantillons 1 et 2 contiennent la même quantité de peroxyde Luperox P mais les conditions de post cuisson ont été modifiées (3 heures à 130 °C sous air en milieu confiné pour 1 ; 12 heures à 70 °C sous vide pour 2).

Les échantillons 1 et 3 diffèrent par l'étape d'introduction du monomère réticulant et du peroxyde. Ces derniers sont introduits dans la deuxième zone (2) de l'extrudeuse soit à une température inférieure par rapport à l'échantillon 1.

L'échantillon 4 contient 50 % de peroxyde en moins. Du SR295 a été incorporé au polypropylène pour diminuer la quantité de peroxyde.

Les échantillons 5 à 7 ont tous des peroxydes et des conditions de post cuisson différents par rapport aux échantillons 1 à 4.

Les sept échantillons ont ensuite été injectés et moulés dans les mêmes conditions et selon les techniques connues de l'homme du métier. Les pièces obtenues ont toutes été réticulées par trempage dans l'eau à 80 °C pendant 12 heures.

Les MFI (Melting Flow Index) obtenus avant et après post cuisson pour les polypropylènes homopolymères imprégnés sont récapitulés dans le tableau 3.

Le MFI fournit des informations sur l'aptitude du matériau à être transformé. Le débit massique est exprimé en g/10 min. Un indice élevé traduit une résistance mécanique faible et une masse molaire inférieure mais une certaine facilité à être transformé. Un indice élevé favorisera le moulage par injection.

Dans ces exemples, le MFI diminue pour les échantillons 1 à 5 lors de la post cuisson signifiant une augmentation du poids moléculaire suite au greffage du silane. Les indices obtenus sont proches pour les essais 1 à 3.

**Tableau 3 : Indice de fluidité, MFI, des échantillons 1 à 7 avant et après post cuisson.**

| Exemple | MFI (180°C/2,16kg) | |
|---|---|---|
| | Avant post cuisson | Après post cuisson |
| 1 | 165 | 46 |
| 2 | 165 | 32 |
| 3 | 170 | 40 |
| 4 | 149 | 76 |
| 5 | 565 | 424 |
| 6 | 160 | 250 |
| 7 | 60 | 100 |

En résumé, les conditions de post cuisson de l'échantillon 2 favorisent une bonne qualité de produit après réticulation (12 heures sous vide à 70 °C). De plus, l'incorporation du peroxyde dans la deuxième zone (2) de l'extrudeuse permet d'obtenir des polymères avec des masses molaires élevées (exemple 3). La température de la deuxième zone (2) de l'extrudeuse est inférieure à celle de la première zone (1).

Température d'introduction du peroxyde, nature du peroxyde et conditions de post cuisson sont parmi les facteurs principaux pour obtenir des granulés de polypropylène greffé silane post réticulable selon l'invention.

## Revendications

1. Procédé de fabrication de granulés de polypropylène, ledit polypropylène étant du polypropylène homopolymère et/ou du copolymère statistique de polypropylène et d'éthylène, post réticulable selon lequel :
- dans une extrudeuse, on imprègne le polypropylène avec au moins un monomère réticulable et au moins un amorceur ;
- en sortie d'extrudeuse, on refroidit les joncs obtenus ;
- on granule le polypropylène imprégné ;
- on greffe au moins un monomère réticulable par post cuisson ;
**caractérisé en ce que**, dans l'extrudeuse :
- on introduit le polypropylène sous forme de granulés dans une première zone (1) de l'extrudeuse à une température supérieure à 165 °C, éventuellement en présence d'au moins un monomère réticulable et/ou d'au moins un amorceur ;
- lorsque au moins un amorceur n'est pas introduit dans la première zone (1) de l'extrudeuse, il est introduit dans une deuxième zone (2) de l'extrudeuse, éventuellement en présence d'au moins un monomère si celui-ci n'a pas été introduit préalablement dans la première zone (1) de l'extrudeuse ;
- la température de la deuxième zone (2) de l'extrudeuse est comprise entre 130 et 165 °C et préférentiellement entre 135 et 150°C ;
- le temps de présence de l'amorceur dans chaque zone de l'extrudeuse est inférieur au cinquième de son temps de demi-vie de décomposition à la température de la dite zone.

2. Procédé selon la revendication 1 **caractérisé en ce que** ledit temps de présence de l'amorceur dans chaque zone de l'extrudeuse est inférieur à un dixième de son temps de demi-vie de décomposition à la température de ladite zone.

3. Procédé selon la revendication 1 **caractérisé en ce que** le polypropylène, le monomère réticulable et l'amorceur sont introduits dans la première zone (1) de l'extrudeuse.

4. Procédé selon la revendication 1 **caractérisé en ce que** le polypropylène et le monomère réticulable sont introduits dans la première zone (1) de l'extrudeuse, l'amorceur étant introduit dans la deuxième zone (2) de l'extrudeuse.

5. Procédé selon la revendication 1 **caractérisé en ce que** le polypropylène est introduit dans la première zone (1) de l'extrudeuse, le monomère réticulable et l'amorceur étant introduit dans la deuxième zone (2) de l'extrudeuse.

6. Procédé selon la revendication 1 **caractérisé en ce que** le monomère réticulable est un vinyltrialcoxy silane de formule suivante : CH₂=CH-Si(OR)₃ dans laquelle R est un groupement alkyle linéaire, ramifié et/ou cyclique comportant de 1 à 20 atomes de carbones, plus avantageusement R = CH₃.

7. Procédé selon la revendication 1 **caractérisé en ce que** l'amorceur est un peroxyde organique, plus avantageusement le *tert*-butyl-perbenzoate.

8. Procédé selon la revendication 1 **caractérisé en ce que** le pourcentage en masse du monomère réticulable est compris entre 1 et 10 % par rapport au polypropylène, plus avantageusement entre 2 et 4 %.

9. Procédé selon la revendication 1 **caractérisé en ce que** le pourcentage en masse de l'amorceur est compris entre 0.1 et 4 % par rapport au polypropylène, plus avantageusement entre 0.5 et 2 %.

10. Procédé selon la revendication 1 **caractérisé en ce que** le greffage du monomère réticulable est réalisé par post cuisson sous pression atmosphérique ou sous vide, respectivement à une température comprise entre 120 et 150 °C pendant 1 à 6 heures et entre 20°C et 110 °C pendant 6 à 24 heures.

11. Procédé selon la revendication 1 **caractérisé en ce que** le polypropylène est en outre imprégné d'un monomère polyvinylique ou polyacrylate, avantageusement de pentaerythritol tetra acrylate.

12. Granulés de polypropylène réticulable obtenus par le procédé objet de l'une des revendications 1 à 11.

13. Article moulé obtenu à partir des granulés selon la revendication 12 après injection desdits granulés et réticulation en atmosphère humide du polypropylène imprégné et post-cuit.

## Patentansprüche

1. Herstellungsverfahren für Polypropylengranulat, wobei das Polypropylen Polypropylen-Homopolymer und/oder statistisches Copolymer von nachvernetzbarem Polypropylen und Ethylen ist, gemäß dem:
- in einem Extruder das Polypropylen mit mindestens einem vernetzbaren Monomer und mindestens einem Initiator getränkt wird;
- am Ausgang des Extruders die erhaltenen Stränge gekühlt werden;
- das getränkte Polypropylen granuliert wird;
- mindestens ein vernetzbares Monomer durch Nachhärten aufgepfropft wird;
**dadurch gekennzeichnet, dass** im Extruder:
- das Polypropylen in Form von Granulat in eine erste Zone (1) des Extruders bei einer Temperatur von über 165°C, gegebenenfalls im Beisein mindestens eines vernetzbaren Monomers und/oder mindestens eines Initiators eingebracht wird;
- wenn nicht mindestens ein Initiator in die erste Zone (1) des Extruders eingebracht wird, er in eine zweite Zone (2) des Extruders, gegebenenfalls im Beisein mindestens eines Monomers eingebracht wird, wenn dieses nicht zuvor in die erste Zone (1) des Extruders eingebracht wurde;
- die Temperatur der zweiten Zone (2) des Extruders zwischen 130 und 165°C und vorzugsweise zwischen 135 und 150°C beträgt;
- die Verweildauer des Initiators in jeder Zone des Extruders kürzer ist als das Fünftel seiner Zerfallshalbwertzeit bei der Temperatur der besagten Zone.

2. Verfahren nach Anspruch 1, **dadurch gekennzeichnet, dass** die Verweildauer des Initiators in jeder Zone des Extruders kürzer ist als ein Zehntel seiner Zerfallshalbwertzeit bei der Temperatur der besagten Zone.

3. Verfahren nach Anspruch 1, **dadurch gekennzeichnet, dass** das Polypropylen, das vernetzbare Monomer und der Initiator in die erste Zone (1) des Extruders eingebracht werden.

4. Verfahren nach Anspruch 1, **dadurch gekennzeichnet, dass** das Polypropylen und das vernetzbare Monomer in die erste Zone (1) des Extruders eingebracht werden, wobei der Initiator in die zweite Zone (2) des Extruders eingebracht wird.

5. Verfahren nach Anspruch 1, **dadurch gekennzeichnet, dass** das Polypropylen in die erste Zone (1) des Extruders eingebracht wird, wobei das vernetzbare Monomer und der Initiator in die zweite Zone (2) des Extruders eingebracht werden.

6. Verfahren nach Anspruch 1, **dadurch gekennzeichnet, dass** das vernetzbare Monomer ein Vinyltrialcoxysilan mit der folgenden Formel ist: CH₂=CH-Si(OR)₃, worin R eine verzweigte und/oder zyklische lineare Alkylgruppe mit 1 bis 20 Kohlenstoffatomen, vorteilhafter R = CH₃ ist.

7. Verfahren nach Anspruch 1, **dadurch gekennzeichnet, dass** der Initiator ein organisches Peroxid, vorteilhafter *tert*-Butyl-Perbenzoat ist.

8. Verfahren nach Anspruch 1, **dadurch gekennzeichnet, dass** der Massenprozentanteil des vernetzbaren Monomers zwischen 1 und 10% gegenüber dem Polypropylen, vorteilhafter zwischen 2 und 4% beträgt.

9. Verfahren nach Anspruch 1, **dadurch gekennzeichnet, dass** der Massenprozentanteil des Initiators zwischen 0,1 und 4% gegenüber dem Polypropylen, vorteilhafter zwischen 0,5 und 2% beträgt.

10. Verfahren nach Anspruch 1, **dadurch gekennzeichnet, dass** das Aufpropfen des vernetzbaren Monomers durch Nachhärten unter Atmosphärendruck oder unter Vakuum bei einer Temperatur zwischen 120 und 150°C über 1 bis 6 Stunden bzw. zwischen 20°C und 110°C über 6 bis 24 Stunden erfolgt.

11. Verfahren nach Anspruch 1, **dadurch gekennzeichnet, dass** das Polypropylen außerdem mit einem Polyvinyl- oder Polyacrylatmonomer, vorteilhafter Weise Pentaerythritol-tetra-Acrylat getränkt wird.

12. Granulat aus vernetzbarem Polypropylen, erhalten durch das Verfahren, das den Gegenstand eines der Ansprüche 1 bis 11 bildet.

13. Geformter Gegenstand, der aus Granulat nach Anspruch 12 nach Einspritzen des Granulats und Vernetzen in feuchter Atmospäre des getränkten und nachgehärteten Polypropylens erhalten wird.

## Claims

1. Process for manufacturing polypropylene granules, with the said polypropylene being homopolymer polypropylene and/or statistical copolymer of polypropylene and ethylene - post-reticulable - wherein:
• one impregnates the polypropylene, in an extruder, with at least one reticulable monomer, and at least one primer;
• on exiting from the extruder, one cools the extruded strings obtained;
• one granulates the impregnated polypropylene;
• one grafts at least one reticulable monomer by post-baking;
**characterized by** the fact that, in the extruder:
• one introduces the polypropylene in the form of granulate into a first area (1) of the extruder at a temperature greater than 165°C, possibly with at least one reticulable monomer and/or at least one primer;
• when at least one primer is not inserted in the first area (1) of the extruder, it is inserted in a second area (2) of the extruder, possibly in the presence of at least one monomer, if this has not already been inserted in the first area (1) of the extruder;
• the temperature of the second area (2) of the extruder is between 130 and 165°C, and preferably between 135 and 150°C;
• the time of presence of the primer in each area of the extruder is less than one fifth of its half-life time of decomposition at the temperature in the said area.

2. Process according to claim 1, **characterized by** the fact that the said presence time of the primer in each area of the extruder is less than one tenth of its half-life time of decomposition at the temperature in the said area.

3. Process according to claim 1, **characterized by** the fact that the polypropylene, the reticulable monomer and the primer are inserted in the first area (1) of the extruder.

4. Process according to claim 1, **characterized by** the fact that the polypropylene and the reticulable monomer are inserted in the first area (1) of he extruder, with the primer being inserted in the second area (2) of the extruder.

5. Process in accordance with claim 1, **characterized by** the fact that the polypropylene is inserted in the first area (1) of the extruder, with the reticulable monomer and the primer being inserted in the second area (2) of the extruder.

6. Process according to claim 1, **characterized by** the fact that the reticulable monomer is a vinyltrialcoxy silane with the following formula CH2=CH-Si(OR)3, in which R is a ramified and/or cyclical linear alkyl grouping incorporating 1 to 20 carbon atoms plus, advantageously, R=CH3.

7. Process according to claim 1, **characterized by** the fact that the primer is an organic peroxide and, more advantageously, tert-butyl-perbenzoate.

8. Process according to claim 1, **characterized by** the fact that the percentage of mass of the reticulable monomer is between 1 and 10% in relation to the polypropylene and, more advantageously, between 2 and 4%.

9. Process according to claim 1, **characterized by** the fact that the percentage in mass of the primer is between 0.1 and 4%, in relation to the polypropylene and, more advantageously, between 0.5% and 2%.

10. Process according to claim 1, **characterized by** the fact that the grafting of the reticulable monomer is produced by post-baking under atmospheric pressure or under vacuum, respectively at a temperature between 120 and 150°C for 1 to 6 hours and between 20°C and 110°C for 6 to 24 hours.

11. Process according to claim 1, **characterized by** the fact that the polypropylene is also impregnated with a polyvinylic or polyacrylate monomere - advantageously pentaerythritol tetra acrylate.

12. Granules of reticulable polypropylene obtained via the process covered by one of the claims 1 to 11.

13. Molded article obtained from granulates in accordance with claim 12, after injection of the said granulates and reticulation in a humid atmosphere of impregnated and post-baked polypropylene.
